Europäisches Patentamt

European Patent Office

Office européen des brevets

(11) Veröffentlichungsnummer: **0 367 057**

**A2**

(12) **EUROPÄISCHE PATENTANMELDUNG**

(21) Anmeldenummer: 89119595.0

(22) Anmeldetag: 22.10.89

(51) Int. Cl.5. **F25B 29/00 , F25B 11/00 , F02C 3/36 , F02C 6/04 , F02C 6/18**

(30) Priorität: 31.10.88 DE 3837052

(43) Veröffentlichungstag der Anmeldung:
09.05.90 Patentblatt 90/19

(84) Benannte Vertragsstaaten:
AT BE CH ES FR GB GR IT LI LU NL SE

(71) Anmelder: FRAUNHOFER-GESELLSCHAFT ZUR FÖRDERUNG DER ANGEWANDTEN FORSCHUNG E.V.
Leonrodstrasse 54
D-8000 München 19(DE)

(72) Erfinder: Heitland, Herbert, Prof. Dr. Ing.
Waldhof 3A
D-3180 Wolfsburg(DE)
Erfinder: Boy, Elmar, Dipl.-Ing.
Pfeilstrasse 26A
D-7000 Stuttgart 80(DE)

(74) Vertreter: Münich, Wilhelm, Dr. et al
Kanzlei Münich, Steinmann, Schiller
Willibaldstrasse 36/38
D-8000 München 21(DE)

(54) **Vorrichtung zum gleichzeitigen Erzeugen von Wärme und Kälte.**

(57) Beschrieben wird eine Vorrichtung zum gleichzeitigen Erzeugen von Wärme und Kälte auf einem oberhalb und einem unterhalb der Temperatur eines Reservoirs gelegenen Temperaturniveau,

- mit einem ersten Kompressor (KI), der ein Arbeitsmedium mit der Temperatur des Reservoirs verdichtet, und einer Brennkammer (BK), in der ein erster Teil des aus dem ersten Kompressor (KI) austretenden Arbeitsmediums eintritt und isobar erwärmt wird, und die austrittsseitig mit einer ersten Turbine (TI) verbunden ist, die den Kompressor (KI) antreibt, und der austrittsseitig das Arbeitsmedium mit einer höheren Temperatur als der Temperatur des Reservoirs entnehmbar ist,

- mit einem zweiten Kompressor (KII), in den der zweite Teil des aus dem ersten Kompressor (KI) austretenden Arbeitsmediums eintritt, und der austrittsseitig über einen Wärmetauscher (WTII), der mit einem Wärmeaustausch-Medium mit der Temperatur des Reservoirs gekühlt wird, mit der Eintrittsseite einer zweiten Turbine (TII) verbunden ist, die den zweiten Kompressor (KII) antreibt, und der austrittsseitig ein nutzbares kaltes Arbeitsmedium mit einer niedrigeren Temperatur als der Temperatur des Reservoirs entnehmbar ist.

Fig.1

## Vorrichtung zum gleichzeitigen Erzeugen von Wärme und Kälte

Die Erfindung bezieht sich auf eine Vorrichtung zum gleichzeitigen Erzeugen von Wärme und Kälte auf einem oberhalb und einem unterhalb der Temperatur eines Reservoirs gelegenen Temperaturniveau.

In einer Vielzahl von Anwendungsfällen ist es erforderlich, gleichzeitig Heiz-und Kühlsysteme einzusetzen. Nur exemplarisch sei das Trocknen und anschließende Kühlhalten leicht verderblicher Lebensmittel genannt.

Gerade im landwirtschaftlichen Bereich und insbesondere in Ländern der dritten Welt ist aber an Standorten mit intensiver landwirtschaftlicher Nutzung keine oder keine ausreichende und/oder zuverlässige Elektrizitätsversorgung vorhanden.

In derartigen Fällen wäre es von Vorteil, über Vorrichtungen zur gleichzeitigen oder wechselseitigen Abgabe von Heiz- und Kühlleistung zu verfügen, die problemlos mit gerade verfügbaren Brennstoffen, wie beispielsweise fossilen Brennstoffen, aber auch regenerativen Brennstoffen, wie aus Biomasse erzeugten Alkoholen oder Pflanzenölen betreibbar sind.

Der Erfindung liegt deshalb die Aufgabe zugrunde, eine Vorrichtung zur gleichzeitigen oder wechselseitigen Abgabe von Heiz- und Kühlleistung anzugeben, zu deren Betrieb nahezu beliebige Brennstoffe und insbesondere regenerative Brennstoffe eingesetzt werden können.

Eine erfindungsgemäße Lösung dieser Aufgabe ist im Anspruch 1 angegeben. Weiterbildungen der Erfindung sind Gegenstand der Unteransprüche.

Die Erfindung geht von dem Grundgedanken aus, eine Vorrichtung mit einem "Heiz-Kreislauf" und einem "Kühl-Kreislauf" zu schaffen, von denen jeder eine Kompressor/Turbineneinheit aufweist, wobei lediglich in dem "Heiz-Kreislauf" eine Brennkammer vorgesehen ist, in der der Vorrichtung als "Antriebsenergie" die bei der Verbrennung des Brennstoffs entstehende Wärme dadurch zugeführt wird, daß das Arbeitsmedium isobar erwärmt wird.

An der Austrittsseite der Turbine der ersten Einheit steht die Heizleistung und an der Austrittsseite der Turbine der zweiten Einheit die Kühlleistung zur Verfügung.

Weiterbildungen der Erfindung sind in den Unteransprüchen angegeben.

Im Anspruch 2 ist angegeben, daß in der Verbindungsleitung zwischen dem ersten Kompressor und dem zweiten Kompressor ein erstes Ventil vorgesehen ist. Dieses Ventil dient durch Steuerung der zum zweiten Kompressor strömenden Menge des vom ersten Kompressor verdichteten Arbeitsmediums. Insbesondere kann man mit diesem Ventil die Menge des für den zweiten Kompressor abgezweigten Teils des verdichteten Arbeitsmediums so einstellen, daß die einzelnen "Kreisläufe" in Bezug auf die gewünschten Heiz- bzw. Kühltemperaturen im Gleichgewicht arbeiten. Darüberhinaus läßt sich mit diesem Ventil immer dann, wenn keine Kühlleistung benötigt wird, der Kreislauf durch den zweiten Kompressor vollständig abschalten (Anspruch 8). Gegebenenfalls kann in diesem Falle auch auf den zweiten Kreislauf vollständig verzichtet werden.

Im Anspruch 3 ist beansprucht, daß die Austrittsseite des ersten Kompressors mit der Eintrittsseite der Brennkammer über einen Wärmetauscher verbunden ist, dessen andere Seite mit dem aus der ersten Turbine austretenden Arbeitsmedium beaufschlagt ist. Durch diesen Wärmetauscher läßt sich - je nach Auslegung der ersten Kompressor/Turbineneinheit - die eingesetzte Brennstoffmenge insbesondere dann verringern, wenn die Heizenergie auf einem vergleichsweise niedrigen Temperaturenniveau benötigt wird.

Wenn dagegen ausschließlich Heizleistung benötigt wird, ist es bevorzugt, daß der Wärmetauscher zwischen der Austrittsseite des ersten Kompressors und der Brennkammer entfällt oder kurz geschlossen wird.

Selbstverständlich ist es möglich, daß die erfindungsgemäße Vorrichtung mechanisch oder unter Zuhilfenahme von elektrischer Hilfsenergie gestartet wird. Bevorzugt ist jedoch die im Anspruch 4 gekennzeichnete Ausgestaltung, bei der zum Starten der Vorrichtung ein Druckbehälter für das Arbeitsmedium vorgesehen ist, der über ein zweites Ventil mit der Eintrittsseite der ersten Turbine verbunden ist. Zum Starten der Vorrichtung wird dieses Ventil geöffnet, so daß die erste Turbine den ersten Kompressor antreibt, wodurch wiederum die zweite Kompressor/Turbineneinheit angeworfen wird.

Dieser Druckbehälter kann gemäß Anspruch 5 dadurch aufgeladen werden, daß er über ein weiteres Ventil mit der Austrittsseite des zweiten Kompressors verbunden ist. Dieses Ventil wird während des kontinuierlichen Betriebs der Vor richtung geöffnet, so daß der Druckbehälter mit Arbeitsmedium mit dem ausgangsseitigen Druckniveau des zweiten Kompressors "aufgeladen" wird.

Die erfindungsgemäße Vorrichtung hat darüberhinaus den Vorteil, daß die entnehmbare Kälte- bzw. Heizleistung leicht durch die Brennstoffzufuhr der Brennkammer steuerbar ist (Anspruch 6). Dabei ist es von besonderem Vorteil, daß das Arbeitsmedium in der Brennkammer isobar erwärmt wird, da damit die konstruktiven Anforderungen an den Aufbau˙ der Brennkammer sowie die Anforderungen hinsichtlich der Qualität des Brennstoffs gering sind und darüberhinaus gerade verfügbare Brennstoffe ohne große Umrüstmaßnahmen eingesetzt werden können. Gegebenenfalls ist es sogar möglich, für die Erwärmung auch andere Energieträger, wie beispielsweise Solarenergie einzusetzen.

Durch die im Anspruch 7 angegebene Weiterbildung, gemäß der der zweite Kompressor zusätzlich Arbeitsmedium mit der Temperatur des Reservoirs ansaugt, ermöglicht eine zusätzliche Variation des Verhältnisses zwischen abgegebener Wärme- und abgegebener Kälteleistung.

Die erfindungsgemäße Vorrichtung kann selbstverständlich mit den verschiedensten Arbeitsmedien verwendet werden. Von besonderem Vorteil hinsichtlich der Verfügbarkeit gerade in abgelegenen Gebieten ist jedoch, daß als Arbeitsmedium Luft eingesetzt werden kann, so daß die Temperatur des Reservoirs die Umgebungstemperatur ist. Damit ist es möglich, einen "offenen" Kreislauf ohne Umweltbelastung zu realisieren.

Darüberhinaus hat die Verwendung von Luft als Arbeitsmedium den Vorteil, daß die erfindungsgemäße Vorrichtung leicht unter Verwendung handelsüblicher Komponenten und insbesondere von im Automobilbau in großen Serien verwendeten Abgas-Turboladern, von denen jeweils einer die erste bzw. zweite Kompressor/Turbineneinheit bildet, realisiert werden kann.

Auch für die weiteren Komponenten, wie beispielsweise für die Wärmetauscher, können natürlich handelsübliche Großserienbauteile zum Beispiel aus dem Automobilbau verwendet werden.

Die Erfindung wird nachstehend anhand eines Ausführungsbeispiels unter Bezugnahme auf die Zeichnung näher beschrieben, in der zeigen:

Figur 1 schematisch den Aufbau einer erfindungsgemäßen Vorrichtung, und

Figur 2 eine Erläuterung der Arbeitsweise einer erfindungsgemäßen Vorrichtung in einem T/S-Diagramm.

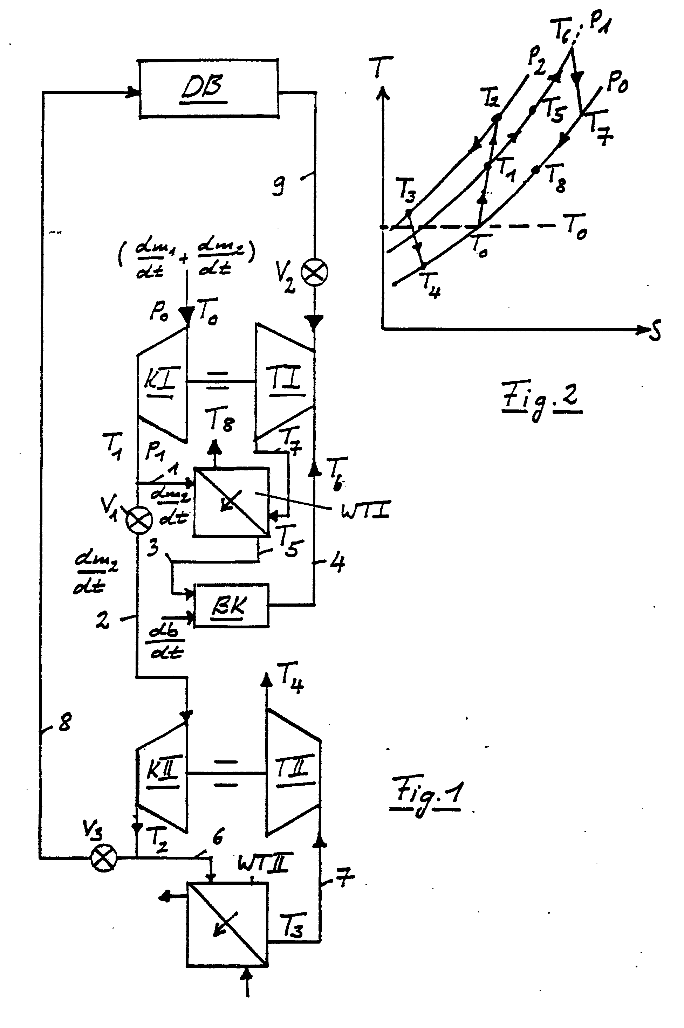

Bei dem in Figur 1 gezeigten Ausführungsbeispiel wird ohne Beschränkung des allgemeinen Erfindungsgedankens als Arbeitsmedium Luft verwendet, die aus der Umgebung mit der Umgebungstemperatur $T_0$ und dem Umgebungsdruck $p_0$ von einem ersten Kompressor (KI) angesaugt wird. Die Austrittsseite des Kompressors (KI) ist über eine Leitung (1) mit dem einen Eingangsanschluß eines Wärmetauschers (WTI) und über eine Leitung (2), in der sich ein Ventil (V1) befindet, mit der Eintrittsseite eines zweiten Kompressors (KII) verbunden. Der zugehörige Ausgangsanschluß des Wärmetauschers (WT1) ist über eine Leitung (3) mit dem Eintrittsanschluß einer Brennkammer (BK) verbunden, in der die Luft durch das Verbrennen eines Brennstoffs, beispielswei se eines fossilen Energieträgers, eines aus Biomasse gewonnenen Alkohols oder eines Pflanzenöls, aber auch durch einen sonstigen Energieträger isobar erwärmt wird. Der Ausgangsanschluß der Brennkammer (BK) ist über eine Leitung (4) mit der Eintrittseite einer ersten Turbine (TI) verbunden, die austrittsseitig über eine Leitung (5) mit dem anderen Eingangsanschluß des Wärmetauschers (WT1) verbunden ist. An dem diesem Eingangsanschluß zugeordneten Ausgangsanschluß kann das Arbeitsmedium, also die Luft zu Heizzwecken entnommen werden.

Die Turbine (TI) treibt den Kompressor (KI) an. Hierzu können die Turbine und der Kompressor beispielsweise - wie in Figur 1 schematisch dargestellt - auf einer gemeinsamen Welle angeordnet sein. Besonders bevorzugt ist es, wenn der Kompressor (KI) und die Turbine (TI) Bestandteile eines aus dem Automobilbau bekannten Abgasturboladers sind, wie er beispielsweise für PKWs oder LKWs in großen Serien gefertigt wird.

Der Kompressor (KII) ist autrittsseitig über eine Leitung (6) mit dem einen Eingangsanschluß eines Wärmetauschers (WTII) verbunden. Der zugehörige Ausgangsanschluß ist über eine Leitung (7) mit dem Eingangsanschluß einer zweiten Turbine (TII) verbunden, aus deren Austritt die Luft zu Kühlzwecken entnehmbar ist. Der Wärmetauscher (WTII) wird bei dem gezeigten Ausführungsbeispiel ebenfalls von Luft mit Umgebungstemperatur (im Gegenstrom) durchströmt.

Ferner ist eine Leitung (8) vorgesehen, die die Austrittsseite des Kompressors (KII) mit einem Druckbehälter (DB) verbindet. Ein Ventil (V3) in der Leitung (8) dient zum Absperren dieser Leitung. Der Druckbehälter (DB) ist ferner über eine Leitung (9), die mittels einers Ventil (VII) absperrbar ist, mit der Eintrittsseite der Turbine (TI) verbunden.

Der Kompressor (KII) und die Turbine (TII) können wiederum Bestandteil eines handelsüblichen Abgasturboladers sein.

Im folgenden soll die Funktionsweise der in Figur 1 schematisch dargestellten Vorrichtung unter Bezugnahme auf Figur 2 näher erläutert werden, in der die Arbeitspunkte der Vorrichtung in einem Temperatur/Entropie-Diagramm (T/S-Diagramm) dargestellt sind. Dabei sind in der Figur 2 Isobare für die Druckwerte $p_0$, $p_1$ und $p_2$ eingezeichnet.

Der Kompressor (KI) saugt aus der Umgebung Luft mit der Temperatur $T_0$ und dem Druck $p_0$ an. Austrittsseitig hat die Luft die Temperatur $T_1$ und den Druck $p_1$. Ein Teil ($dm_1/dt$) der verdichteten Luft strömt über die Leitung (1) zum Wärmetauscher (WTI), während der andere Teil ($dm_2/dt$) über die Leitung (2) zum zweiten Kompressor (KII) strömt.

Der Hauptluftstrom ($dm_1/dt$) erwärmt sich im Wärmetauscher (WTI) bei gleichbleibendem Druck

$p_1$ auf die Temperatur $T_5$ durch Aufnahme von Wärme aus dem Abgas der Turbine (TI). Dies ist durch einen Pfeil symbolisiert.

In der Brennkammer (BK) wird dem Luftstrom ($dm_1/dt$) der Brennstoff (-Strom) $db/dt$ zugemischt und verbrannt, so daß sich am Ausgangsanschluß der Brennkammer (BK) bei weiterhin gleichbleibendem Druck $p_1$ die Temperatur $T_6$ einstellt.

In der Turbine (TI) wird nun der Luftstrom auf den Umgebungsdruck $p_0$ expandiert, wobei sich die Temperatur auf $T_7$ abkühlt. Durch die Wärmeabgabe im Wärmetauscher (WTI) kühlt sich der Luftstrom auf die Temperatur $T_8$ ab, mit der er zu Heizzwecken zur Verfügung steht.

Der (Neben-)Luftstrom ($dm_2/dt$) wird im Kompressor (KII) vom Druck $p_1$ auf den Druck $p_2$ verdichtet, wodurch sich die Temperatur von $T_1$ auf $T_2$ erhöht. Im Wärmetauscher (WTII) wird der Luftstrom bei gleichbleibendem Druck $p_2$ stark abgekühlt, so daß er mit der Temperatur $T_2$ der Turbine (TII) zufließt. Nach Expansion auf Umgebungsdruck $p_0$, durch die sich Luftstrom auf die Temperatur $T_4$ abkühlt, steht dieser Luftstrom zu Kühlzwecken zur Verfügung.

Der Hauptluftstrom ($dm_1/dt$) gelangt über den Wärmetauscher (WTI) zur Brennkammer (BK), wobei sich bei gleichbleibendem Druck $p_1$ die Luft auf $T_5$ durch Aufnahme von Wärme aus dem heißen Abgas erwärmt. In der Brennkammer (BK) wird der Luft ($dm_1/dt$) der Brennstoff ($db/dt$) zugemischt und verbrannt, wobei sich eine Abgastemperatur $T_6$ nach Verlassen der Brennkammer (BK) bei gleichbleibendem Druck $p_1$ einstellt. In der Turbine (TI) wird nun unter Arbeitsabgabe das Abgas auf den Umgebungsdruck $p_0$ expandiert, wobei sich die Temperatur des Abgases auf $T_7$ abkühlt. Durch die Wärmeabgabe im Wärmetauscher (WTI) kühlt sich das Abgas weiter auf $T_8$ ab, bevor es das Aggregat verläßt.

Der Nebenluftstrom ($dm_2/dt$) wird nun im Kompressor (KII) des zweiten Turbosatzes vom Druck $p_1$ auf den Druck $p_2$ verdichtet, wobei sich die Temperatur von $T_1$ auf $T_2$ erhöht. Im Wärmetauscher (WTII) wird dieser Luftstrom bei gleichbleibendem Druck $p_2$ stark abgekühlt, so daß er mit der Temperatur $T_2$ der Turbine (TII) zufließt. Nach der Expansion auf Umgebungsdruck $p_0$ steht dieser Luftstrom bei weiterer Abkühlung auf $T_4$ zu Kühlzwecken zur Verfügung.

Entsprechend der geometrischen Auslegung der Kompressen und der Turbinen der Turbosätze stellt sich in beiden Turbosätzen ein Leistungsgleichgewicht ein. Im ersten Turbosatz wird das Leistungsgleichgewicht dann erreicht, wenn

$$(dm_1/dt + dm_2/dt) * (T_1 - T_0) = (dm_1 + b/dt) * (T_6 - T_7)$$

ist; hierbei bedeutet $dx/dt$ ein Differential nach der "Zeit", also einen Massenstrom.

Vernachlässigt man $db/dt$ gegenüber $dm_1/dt$, dann ergibt sich für die durch den zweiten Turbosatz strömende Luftmenge

$$dm_2/dt = dm_1/dt * ((T_6 - T_7)/(T_1 - T_0) - 1).$$

Mit vermehrter Brennstoffzufuhr steigt $T_6$ und damit auch $dm_2/dt$. Das Leistungsgleichgewicht am zweiten Turbosatz wird direkt durch die Temperaturdifferenzen an der Turbine (TII) und dem Kompressor (KII) bestimmt. Es gilt

$$T_2 - T_1 = T_3 - T_4.$$

Die mögliche Drucksteigerung im Kompressor (KII) hängt nun stark von der abgezweigten Luftmenge in $dm_2/dt$ und somit auch von der umgesetzten Brennstoffmenge ($db/dt$) in der Brennkammer (BK) ab. Da die Expansionsendtemperatur $T_4$ direkt vom Druckverhältnis $p_3/p_0$ abhängig ist und die zur Verfügung stehende Kühlleistung proportional zum Luftdurchsatz $dm_1/dt$ und zur Temperaturdifferenz ($T_4 - T_0$) ist, läßt sich die Kühlleistung in einfacher Weise direkt über die Brennstoffzufuhr regeln.

Ein Anlassen des Aggregates läßt sich durch Zwischenschaltung eines Druckbehälters (DB) durch Öffnen des Ventils ($V_2$) ohne Zuhilfenahme eines elektrischen Anlassers relativ leicht bewirken. Der Druckbehälter (DB) kann dabei während des normalen Betriebs durch Öffnen des Ventils ($V_3$) wieder aufgefüllt werden.

Soll im wesentlichen Wärme erzeugt werden, so kann auf den Wärmetauscher (WTI) verzichtet werden. Dabei steigt für den gleichen Betriebspunkt der Brennstoffbedarf.

Vorstehend ist die Erfindung anhand eines Ausführungsbeispiels ohne Beschränkung des allgemeinen Erfindungsgedankens beschrieben worden, innerhalb dessen selbstverständlich die verschiedensten Modifikationen möglich sind:

So können beispielsweise auch andere Arbeitsmedien als Luft eingesetzt werden. Luft hat jedoch gegenüber beispielsweise gegenüber Fluorkohlenwasserstoffen den Vorteil der leichteren Verfügbarkeit und der besseren Umweltverträglichkeit. Selbstverständlich kann in bestimmten Einsatzfällen die Temperatur des Reservoirs auch eine andere Temperatur als die Umgebungstemperatur sein.

Auch kann gegebenenfalls der zweite Turbosatz nicht nur in Reihe, sondern auch parallel geschaltet sein, und direkt Luft aus der Umgebung ansaugen.

Ferner können Maßnahmen vorgesehen werden, die ein Kurzschließen des ersten Wärmetauschers und/oder des zweiten Turbosatzes ermöglichen.

**Ansprüche**

1. Vorrichtung zum gleichzeitigen Erzeugen.

von Wärme und Kälte auf einem oberhalb und einem unterhalb der Temperatur eines Reservoirs gelegenen Temperaturniveau,
- mit einem ersten Kompressor (KI), der ein Arbeitsmedium mit der Temperatur des Reservoirs verdichtet, und einer Brennkammer (BK), in der ein erster Teil des aus dem ersten Kompressor (KI) austretenden Arbeitsmediums eintritt und isobar erwärmt wird, und die austrittsseitig mit einer ersten Turbine (TI) verbunden ist, die den Kompressor (KI) antreibt, und der austrittsseitig das Arbeitsmedium mit einer höheren Temperatur als der Temperatur des Reservoirs entnehmbar ist,
- mit einem zweiten Kompressor (KII), in den der zweite Teil des aus dem ersten Kompressor (KI) austretenden Arbeitsmediums eintritt, und der austrittsseitig über einen Wärmetauscher (WTII), der mit einem Wärmeaustausch-Medium mit der Temperatur des Reservoirs gekühlt wird, mit der Eintrittsseite einer zweiten Turbine (TII) verbunden ist, die den zweiten Kompressor (KII) antreibt, und der austrittsseitig ein nutzbares kaltes Arbeitsmedium mit einer niedrigeren Temperatur als der Temperatur des Reservoirs entnehmbar ist.

2. Vorrichtung nach Anspruch 1, dadurch **gekennzeichnet**, daß in der Verbindungsleitung zwischen dem ersten Kompressor (KI) und dem zweiten Kompressor (KII) ein erstes Steuerventil (V1) vorgesehen ist, um bei Bedarf die Kälteerzeugung zu verändern.

3. Vorrichtung nach Anspruch 1 oder 2, dadurch **gekennzeichnet**, daß die Austrittsseite des ersten Kompressors (KI) mit der Eintrittsseite der Brennkammer (BK) über einen Wärmetauscher (WTI) verbunden ist, dessen andere Seite mit der Austrittsseite der ersten Turbine (TI) verbunden ist.

4. Vorrichtung nach einem der Ansprüche 1 bis 3, dadurch **gekennzeichnet**, daß zum Starten der Vorrichtung ein Druckbehälter (DB) für das Arbeitsmedium vorgesehen ist, der über ein zweites Steuerventil (V2) mit der Eintrittsseite der ersten Turbine (TI) verbunden ist.

5. Vorrichtung nach Anspruch 4, dadurch **gekennzeichnet**, daß der Druckbehälter über ein weiteres Steuerventil (V3) mit der Austrittsseite des zweiten Kompressors (KII) verbunden ist.

6. Vorrichtung nach einem der Ansprüche 1 bis 5, dadurch **gekennzeichnet**, daß die entnehmbare Kälte- bzw. Heizleistung durch die Brennstoffzufuhr der Brennkammer steuerbar ist.

7. Vorrichtung nach einem der Ansprüche 1 bis 6, dadurch **gekennzeichnet**, daß der zweite Kompressor (KII) zusätzlich Arbeitsmedium mit der Temperatur des Reservoirs ansaugt.

8. Vorrichtung nach einem der Ansprüche 1 bis 7, dadurch **gekennzeichnet**, daß der Kreislauf durch den zweiten Kompressor (KII) abschaltbar ist.

9. Vorrichtung nach einem der Ansprüche 1 bis 8, dadurch **gekennzeichnet**, daß das Arbeitsmedium Luft ist.

10. Vorrichtung nach Anspruch 9, dadurch **gekennzeichnet**, daß sog. Abgas-Turbolader die erste und zweite Kompressor/Turbineneinheit (KI,TI bzw. KII, TII) bilden.

$$\left(\frac{dm_1}{dt} + \frac{dm_2}{dt}\right)$$

*Fig.2*

*Fig.1*